# EUROPÄISCHE PATENTSCHRIFT

(11) **EP 0 568 787 B1**
(45) Veröffentlichungstag und Bekanntmachung des Hinweises auf die Patenterteilung: **19.05.1999**
(21) Anmeldenummer: 93103542.2
(22) Anmeldetag: 05.03.1993
(51) Int. Cl.: A21B 3/07

(54) **Be- und Entladeeinrichtung für Etagenbacköfen**
Loading and unloading of a baking oven comprising multiple compartments
Système de chargement et de déchargement d'un four de boulangerie à étages

(30) Priorität: 05.05.1992 DE 4214235
(43) Veröffentlichungstag der Anmeldung: 10.11.1993
(73) Patentinhaber: Werner & Pfleiderer Lebensmitteltechnik GmbH, 91550 Dinkelsbühl (DE)
(72) Erfinder: Knost, Dieter, Dipl.-Ing., W-7188 Fichtenau (DE); Meissner, Karl, Dipl.-Ing. (FH), SF-00200 Helsinki (FI); Joukainen, Jukka, SF-49540 Metsäkylä (FI)
(74) Vertreter: Rau, Manfred, Dr. Dipl.-Ing.

(56) Entgegenhaltungen:
- EP-A- 0 231 831
- DE-A- 2 741 503
- DE-A- 3 631 695
- DE-B- 1 227 402
- FR-A- 1 584 271
- FR-A- 2 492 224

## Beschreibung

Die Erfindung betrifft eine Be-und Entladeeinrichtung für Etagenbacköfen gemäß dem Oberbegriff des Anspruches 1.

Zur Beschickung von Etagenbacköfen sind Beschickungshilfen bekannt, die stationär vor oder am Ofen montiert sind. Hierbei werden auch Krabbelbänder für das Aufkrabbeln der fertigen Backware aus den Herden des Etagenbackofens verwendet. Ferner ist es auch bekannt, dass diese Beschickungshilfen vor der Ofenfront auf den Fussboden mittels Wagen (DE 29 34 369 A1) oder auf Schienen (FR 1 584 271) verfahrbar gestaltet sind.

In der EP 02 31 831 A2 ist auch bereits ein Be- und Entladeverfahren für Etagenbacköfen angegeben, mit dem die Entnahme von Teiglingen aus einem Gärschrank und die Zuführung dieser Teiglinge zu einem Etagenbackofen sowie das Ausbacken ermöglicht werden soll. Hierbei wird über eine quer zur Ofenfront verfahrbaren Laufkatze, die in an der Decke angebrachten Schienen läuft und über eine Hubschere einen mit einem Krabbelband versehenen Beschickungstisch trägt, ein Bewegungsablauf in drei Ebenen realisiert. Einzelheiten für dieses automatische Transportsystem, wie z.B Antrieb für Hubschere, Laufkatze, Arbeitstisch und Krabbelband sind in dieser Schrift nicht offenbart.

Die Anordnung des Arbeitstisches an einer Hubschere stellt eine äusserst unstabile Konstruktion dar, mit der die durch den Bewegungsablauf in drei Ebenen anfallenden unterschiedlichen Momente in keiner Weise beherrscht werden können, so dass hiermit keine exakte Positionierung des Arbeitstisches an den einzelnen Be-und Entladepunkten verwirklich werden kann.

Alle bekannten automatischen Beschickungshilfen haftet überdies der Mangel an, dass durch das mechanische Ab-und Aufkrabbeln eine stärkere Verschmutzung der Herdböden durch Mehl-und Teigreste eintritt, die - um ein Anbrennen dieser Reste zu vermeiden - des öfteren manuell entfernt werden müssen. Diese Tätigkeit ist bei den grossen Herdtiefen von bis zu 2 m sehr kraftaufwendig.

Gemäß DE 27 41 503 A ist ein Herplattenhobel mit Saugdüse bekannt. Dieser für den Handgebrauch dimensionierte Herdplattenhobel weist einen Eisenblock mit Saugdüsen und daran befestigten Schaberplatten auf, welche an der Herdplatte verfestigte Rückstände durch Abschaben lösen sollen. Die Saugdüsen sind über einen Saugstutzen mit einem Halterohr verbunden, welches an eine Saugeinrichtung angeschlossen ist. Zum Reinigen eines Herdes wird der Herdplattenhobel hin- und herbewegt, bis der gesamte Herdraum gereinigt ist. Somit kann die gesamte Herdfläche durch ein einziges Einführen des Herdplattenhobels nicht gereinigt werden. Die Handbetätigung hat bei großen Etagenbacköfen den Nachteil, daß sie sehr kraft- und zeitaufwendig ist und in vielen Fällen zusätzlich noch die Nutzung einer Leiter erforderlich macht.

Der Erfindung liegt die Aufgabe zugrunde eine Be-und Entladeeinrichtung für Etagenbacköfen bereitaustellen, die die Herdböden der Etagenbacköfen sauberer hält.

Die Aufgabe wird erfindungsgemäss durch die im Kennzeichnungsteil des Patentanspruches 1 angegebenen Merkmale gelöst.
Die erfindungsgemässe Be-und Entladeeinrichtung ist in Abhängigkeit des jeweiligen Backprogrmmes in drei Achsen, in der X-Achse vor der Ofenfront, in der Y-Achse über die verschiedenen Herdhöhen und in der Z-Achse in den Ofen und Gärschrank hinein und wieder heraus vollautomtisch verfahrbar. Durch die verwindungsfesten Hubsäulen ist der Beschickungstisch sicher geführt und über die Steuereinrichtung jeder Halteposition exakt zuführbar.

Durch die vorgesehene Saugeinrichtung, die beim Ein- und Ausfahren in den Ofen und Gärschrank mit einem Saugluftstrom beaufschlagt wird, wird die Sauberhaltung der Backflächen, des Bandes und des Gärschrankes gewährleistet.

Hierdurch entfällt eine manuelle Reinigung der Backflächen, da sämtliche Teig- und Mehlreste abgesaugt werden und somit auch der Bewegungsablauf beim Beschicken und beim Ausbacken ungehindert ablaufen kann.

In Weiterbildung der Erfindung nach den Merkmalen des Anspruches 2 ist für die Hub-und Senkbewegung eine sichere Führung und ein präziser Antrieb sichergestellt.

Durch die Merkmale der Ansprüche 3 und 4 ist eine leichte und stabile Ausbildung der Hubsäulen gegeben.

Eine besonders günstige Weiterbildung der Erfindung ist durch die Merkmale des Anspruches 5 für die Bewegung der Laufkatze vor der Ofenfront aufgezeigt.

Mit den Merkmalen des Anspruches 6 wird durch die Arretierung der Laufkatze eine lagegenaue Bewegung in der Z-Achse gewährleistet.

Besonders zweckmässige Ausgestaltungen der Erfindung liegen nach den Ansprüchen 7 und 8 vor, die hiernach in allen drei Achsen eine sichere Positionierung sowie ein sanftes Anfahren und Anhalten der Einrichtung sichergestellt ist.

Mit den Merkmalen des Anspruches 9 sind besonders günstige Steuerschalter für die einzelnen Haltepositionen angegeben.

Eine besonders zweckmässige Ausgestaltung des Beschickungstisches ist nach den Merkmalen des Patentanspruches 10 gegeben.

Die Erfindung soll nachfolgend anhand einer Zeichnung näher erläutert werden. Es zeigt
- Fig. 1: eine Gesamtansicht einer vor einer Ofenfront angeordneten Be-und Entladeeinrichtung
- Fig. 2: eine vergrösserte Darstellung gemäss Fig. 1 ohne Ofenfront und mit prinzipiellen Aufbau einer SPS-Steuerung
- Fig. 3: den unteren inneren Teil einer Hubsäule 3 mit Führungsstange 6, Gewindespindel 5, Steuerschalter 7, 7' ohne Flanschplatte 8
- Fig. 4: eine Teilansicht des Beschickungstisches 2 zwischen zwei Herdplatten 11' im Schnitt dargestellt.

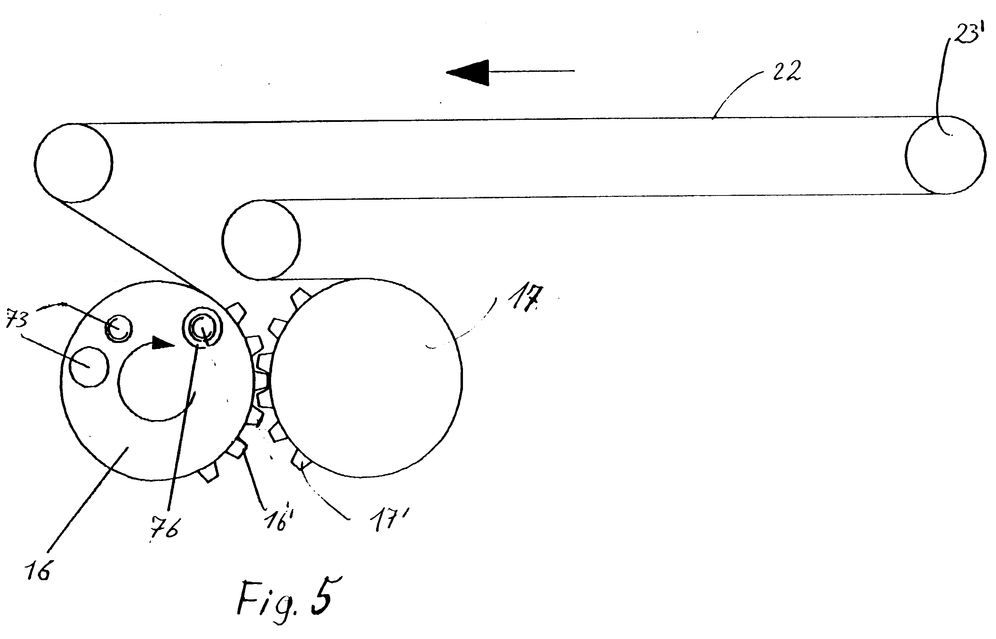

- Fig. 5: den Antrieb für das Band 22 ohne Beschickungstisch 2

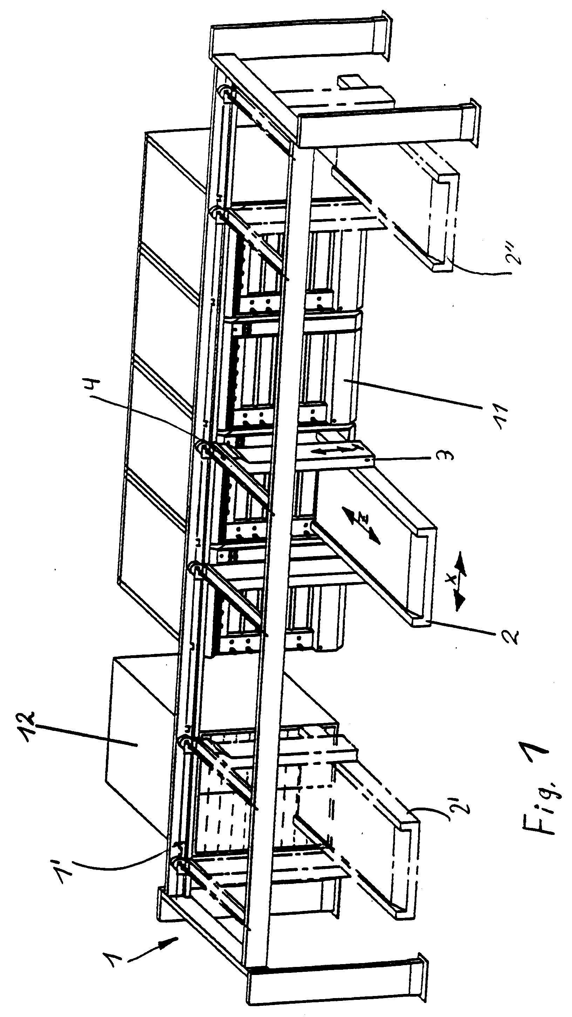

Wie der Fig 1 entnehmbar ist, ist vor einer Ofenfront, bestehend aus vier Etagenbacöfen 11 und einem daneben angeordneten Gärschrank 12 eine selbstragende Laufbahn 1 frei aufgestellt. In den Schienen 1'' dieser Laufbahn 1 befindet sich eine in der X-Achse frei verfahrbare Laufkatze 4. Über zwei Hubsäulen 3 ist ein länglicher Beschickungstisch 2 heb- und senkbar (Y-Achse) an der Laufkatze 4 befestigt. Der Beschickungstisch 2 ist mit einer über einen Motor 15 vor-und zurück beweglichen Zunge 23 (Z-Achse), über welche ein vor- und rückwärts antreibbares Band 22 (Krabbelband) geführt ist, versehen.
In der Gesamtdarstellung gemäss Fig. 1 ist der Arbeitstisch in drei Positionen:links vor dem Gärschrank 12 (2'), in der Mitte vor einem Etagenbackofen 11 (2) und rechts in der Abgabeposition (2'') dargestellt.

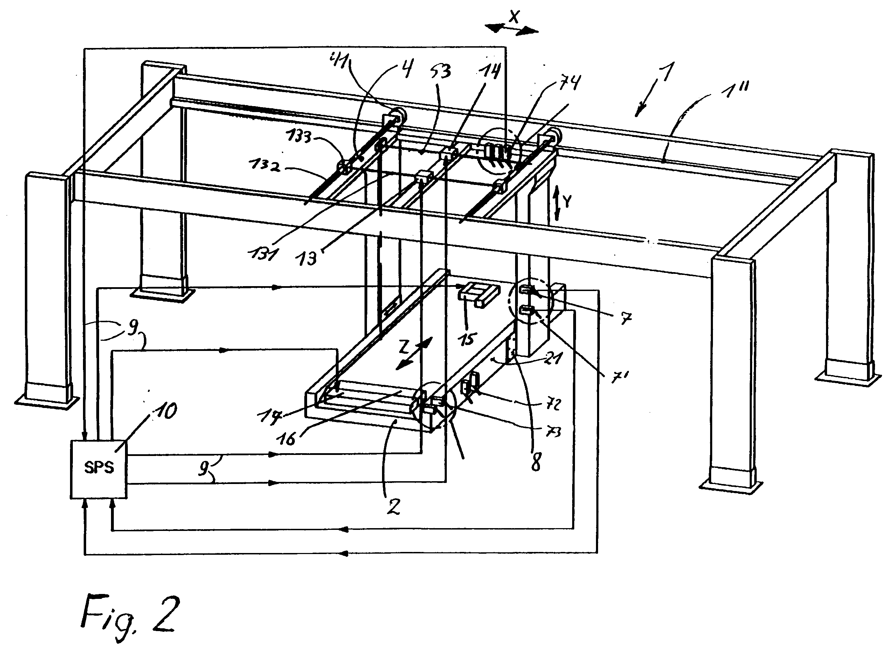

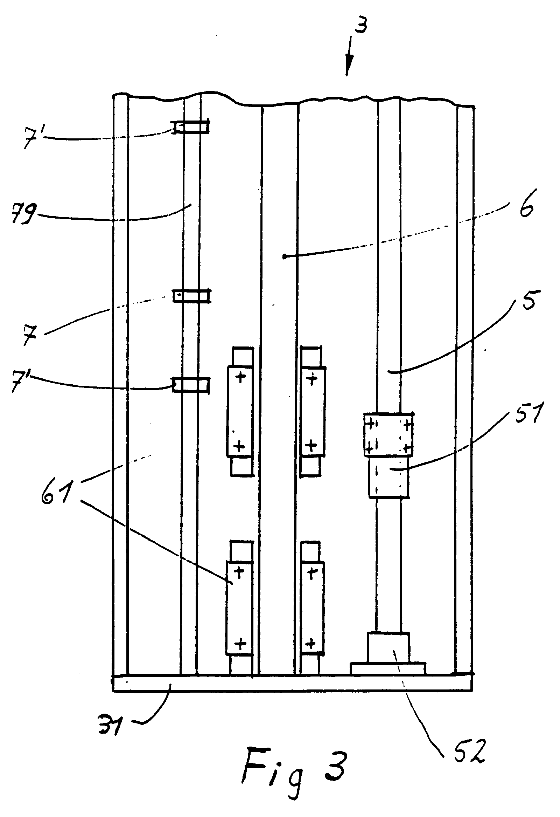

Die Hubsäulen 3 bestehen aus verwindungsfesten gekanteten U-Profil-Träger mit einer unteren profilabschliessenden Bodenplatte 31 (Fig. 3).
In jeder Hubsäule 3 ist eine vertikale Gewindespindel 5 und Führungsstange 6 untergebracht.
Die Gewindespindel 5 ist über ein auf der Bodenplatte 31 befestigtes Lager 52 kugelgelagert angeordnet (die obrige Lagerung in der Hubsäule ist nicht dargestellt) und mit einer Spindelmutter 51 versehen. Oben sind die Gewindespindeln 5 über Antriebsachsen 53 mit einem von der Laufkatze 4 getragenen Motor 14 verbunden (Fig.2). Jeder Führungsstange 6 sind zwei Führungsschlitten 61 zugeordnet.
Der Beschickungstisch ist mit seinen Seitenteilen 21 über Flanschplatten 8 mit der Spindelmutter 51 und den Führungsschlitten 61 verschraubt. In einer der beiden Hubsäulen 3 ist ferner eine mit entsprechend den Herdabständen des Etagenbackofens 11 mit Steuerschalterpaaren 7,7' ausgerüstete Leiste 79 zur Steuerung der Hubbewegung des Arbeitstisches 2 angeordnet.
Die Be-und Entladeeinrichtung ist mit vier frequenzgeregelten Motoren (13,14,15 und 17) ausgerüstet, die über eine Steuereinrichtung 10 gesteuert werden. Die Steuereinrichtung 10 ist als speicherprogrammierbare Steuerung ausgebildet und wird im folgenden als SPS bezeichnet. Der prinzipielle Aufbau dieser SPS 10 ist in der Fig. 2 dargestellt.
Über die SPS 10 werden jeweils die Fahrtrichtung bzw. die Drehrichtung und die Geschwindigkeit der Motoren vorgegeben. Alle Haltepositionen werden in jeder Achse über induktive Näherungsschalter erfasst. Die Aktivierung des jeweiligen Näherungsschalters entsprechend der gewünschten Halteposition wird von der SPS gesetzt, das heisst die SPS adressiert die jeweilige Halteposition in Abhängigkeit des Ofenprogrammes und aktiviert den dortigen Näherungsschalter 7.

Die Bewegung in Z-Richtung erfolgt durch die Zunge 23, die in den Seltenteilen 21 des Beschickungstisches 2 geführt und über den Motor 15 vor - in den Ofen 11 oder Gärschrank 12 rein- und zurückgefahren werden kann. Das die Teiglinge 18 aufnehmende Band 22 ist dabei über die mit einem Radius versehene Zungenspitze 23' geführt und hinten mit seinen beiden Ende an dem Trommelpaar 16,17 befestigt. Das Trommelpaar 16,17, bestehend aus einem Trommelmotor 17 und der Bandtrommel 16, korrespondiert über die Verzahnung 16',17' miteinander. Die beiden Seitenteile 21 sind über ein Tragblech 24 und durch einen Rohrrahmen 25 miteinander verbunden, wobei dieser Längsholme umfaßt und ein Vierkantprofil aufweist. Nach der Umlenkung des Bandes 22 an der Zungenspitze 23', unmittelbar nach der Zunge 23 ist ein mit dem Rohrrahmen 25 verbundenes Rohr 19 quer angeordnet. Dieses Rohr 19 ist als Saugeinrichtung ausgebildet und lenkt das Band 22 nach seiner Umlenkung an der Zungenspitze 23' zur Unterseite des Tragbleches 24, wo es zum Trommelmotor 17 zurückgeführt ist.

Nachfolgend werden die einzelnen Bewegungsabläufe erläutert.

Bewegung in der X-Achse:
Das Gerät bewegt sich in der X-Achse vor einem Gärschrank 12 und maximal fünf Etagenbacköfen 11. Jeder Ofen und auch der Gärschrank sind durch Kontaktgeber identifiziert (in der Zeichnung nicht näher dargestellt). An der Laufkatze 4 sind 3 oder mehr Näherungsschalter 74 montiert die mitbewegt werden. Jede Halteposition in X-Richtung ist über eine bestimmte Anordnung von Geberschienen identifiziert. Die 3 Näherungsschalter 74 (z.B. 1 Schalter bedeckt und 2 Schalter bedeckt= Ofenposition 1) können bis zu 4 verschiedene Haltepositionen identifizieren. Die Fahrtrichtung wird über die Impulsfolge festgestellt. Für weitere Haltepositionen sind weitere Näherungsschalter 74 zu installieren. Die 1. und 2. Näherungsschalter 74 identifizieren gleichzeitig die Halteposition und starten die Bremsfunktion (Schleichgang). Der 3. Schalter setzt in allen Haltepositionen das Stopsignal Bremse ein. Auf diese Weise wird jede Position in X-Richtung angefahren. Die SPS wirkt dabei auf den Motor 13, der über eine durchgehende Welle 131 einem Kegelradgetriebe 133 über Achswellen 132 mit den Rollen 41 der Laufkatze 4 verbunden ist.

Bewegung in der Y-Achse (auf und ab):
Die Halteposition im Hub-Senkbetrieb entsprechen den Etagen des Ofens 11 der Be-und Entladeklappe des Gärschrankes 12 sowie eventuell noch vorhandener Abgabepositionen. Jede Halteposition in Y-Richtung wird durch ein Näherungsschalterpaar 7,7' fixiert. Auch hier wird bei Erreichen des ersten Schalters des jeweiligen Paares die Geschwindigkeit an der Bremsrampe nach unten geführt. Beim Erreichen des zweiten Schalters des jeweiligen Paares fällt die Bremse ein und der Antrieb steht sofort. So können über Schnellgang/Schleichgang auch im Hub-Senkbetrieb exakte Positionen angefahren werden. Das jeweilig aktive Endschalterpaar (in der Zeichnung 7,7') wird jeweils über die SPS aus dem Programm heraus adressiert. Die SPS wirkt dabei auf den Motor 14 der mittels zweier Achsen 53 mit den Gewindespindeln 5 der Hubsäulen 3 fest gekoppelt ist.

Bewegung in Z-Richtung (Ein-und Ausfahren der Zunge 23)
Die Bewegung in Z-Richtung, d.h. das Einfahren der Zunge 23 in den Ofen 11 bzw. Gärschrank 12 und das Herausfahren der Zunge 23 ist in zwei Bewegungsabschnitte unterteilt, die jedoch gleichzeitig ablaufen.
Die Zunge 23 fährt in den Gärschrank 12 ein, Teiglinge 18 sollen aufgenommen werden.
Mit dem Ausfahren der Zunge 23 wird gleichzeitig das Band 22 rückwärts nach hinten über die Zunge 23 gezogen. Der Trommelmotor 17 dreht links herum und wickelt das Band 22 nach vorn ab, die mitlaufende Bandtrommel 16 dreht entgegengesetzt und wickelt das Band 22 nach hinten auf. Drehrichtung und-geschwindigkeit werden dabei synchron mit der Zunge 23 über die SPS und Frequenzumformer gesteuert. Die Bewegung der Zunge 23 wird durch den Motor 15 und die Bewegung des Bandes 22 durch das Trommelpaar 16, 17 ausgeführt. Die mitlaufenden Endschalter 72 fixieren die Endabschaltpunkte für die Z-Bewegung der Zunge 23 (System=X-Achse). Das Endschalterpaar 73 meldet die Bewegungsrichtung der Bandtrommel 16. Dabei wird durch die Impulsfolge an beiden Näherungsschaltern 73 die Bewegungsrichtung der Trommeln erkannt. Über einen Impulszähler 76 wird der Weg des Bandes 22 bestimmt.

Zurückfahren der Zunge 23, Ablegen der Teiglinge 18 auf die Herdplatte 11' des Ofens 11:
Nachdem die Zunge 23 in eine Ofenetage eingefahren ist, werden in der Rückwärtsbewegung die Teiglinge 18 auf die Backplatte 11' abgelegt. Die Zunge 23 wird zurückgezogen während gleichzeitig das Band 22 nach Vorwärts aufgewickelt wird. Der Trommelmotor 17 dreht dabei im Uhrzeigersinn und wickelt das Band 22 nach vorne auf, die Bandtrommel 16 dreht gegen den Uhrzeigersinn und wickelt das Band 22 nach hinten ab. Die Steuerung der Bewegung erfolgt über die SPS.

Hubmechanismus/Aufbau der Hubsäule:
Der Beschickungstisch 2 des Be-und Entladegeräts wird in zwei Hubesäulen 3 auf-und abgeführt. Die Hubbewegung wird über je eine Gewindespindel 5 realisiert, die in der Säule 3 eingebaut ist. Die Gewindespindeln 5 werden über je ein Schneckengetriebe angetrieben. Die Schneckengetriebe beider Säulen sind mit Wellen 53 mit einem Motor 14 verbunden. Der Motor 14 treibt beide Schneckengetriebe synchron an. Der Motor 14 befindet sich auf der Laufkatze 4 (Fig. 2). Beim Heben und Senken dreht sich die Gewindespindel 5, die Spindelmutter 51 fährt dabei an der Spindel 5 auf und ab. Mit der Spindelmutter 51 ist die Flanschplatte 8 verschraubt, an der Flanschplatte 8 wird der Beschickungstisch befestigt. Zum Ausgleich des Kippmoments ist der Beschickungstisch 2 über die Flanschplatte 8 ebenfalls mit den beiden Bewegungsschlitten 61 verbunden. Die Bewegungsschlitten 61 fahren auf der Führungsstange 6 auf und ab. Mit 7,7' ist das Endschalterpaar bezeichnet, das die Brems- und Stop-Position in der Y-Achse fixiert.

Wenn der Beschickungstisch 2 in der Z-Richtung (Beschickung oder Entleerung) betrieben wird ist die Laufkatze 4 (X-Richtung) durch eine nicht näher dargestellte an der Laufkatze 4 befestigte Verriegelungseinrichtung, die in die Kerbenleiste 1' der Laufbahn 1 eingreift, arretiert.

Die Motoren 13,14,15,16 und 17 sind über Leitungen 9 mit SPS 10 elektrisch leitend verbunden.

Absaugeinrichtung:

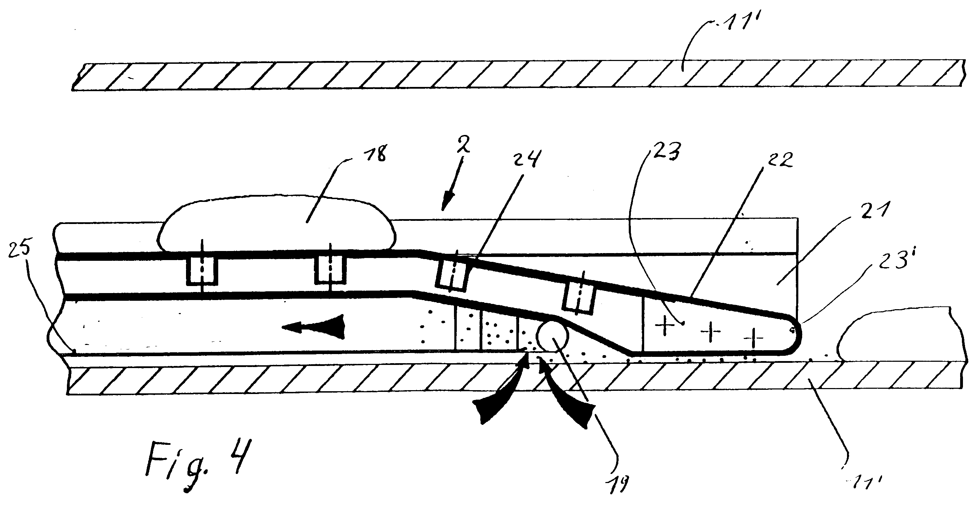

In Fig 4 ist die integrierte Absaugeinrichtung dargestellt. Das Band 22 wird an der Spitze 23', der Zunge 23 über einen Radius umgelenkt und direkt unterhalb des Tragbleches 24 zurückgeführt. Die beiden Seitenführungen 21 sind mit einem Rohrrahmen 25 verbunden, dieser Rohrrahmen 25 dient gleichzeitig zur Luftführung als Saugrohr. Innerhalb des Rohrrahmes 25 werden Vier Vierkantsaugrohre unter dem Tragblech 24 nach vorn geführt und münden in das Rohr 19 unterhalb des Bandes 22. Bei jedem Einfahren In den Gärschrank bzw. Ofen wird über dieses Saugrohrsystem am Rohr 19 untrhalb des Bandes 22 Luft angesogen und so verbranntes Mehl, Krümmchen und Backrückstände abgesogen. Der Staub wird über das Saugrohrsystem in dem Beschickungstisch 2 über ein Schlauchsystem auf die Laufkatze 4 und von der Laufkatze 4 herunter in ein Filtersystem abgesogen. Auf diese Weise ist es erstmals möglich, auf das manuelle Reinigen der Backplatten des Ofens zu verzichten, da das Gerät selbsttätig die Backfläche immer sauber hält.
Mehlrückstände vom Belegungsband werden ebenfalls von diesem Saugrohrsystem effektiv abgesogen.

Alle Näherungsschaltersysteme zur Positions- und Richtungserkennung, sowie zur Wegbestimmung können auch durch Inkremmentalgebersystem, übliche mechanische Endschaltersysteme oder lineare Weggebersysteme ersetzt werden.

## Patentansprüche

1. Be- und Entladeeinrichtung für Etagenbacköfen (11),
a) die Teiglinge (18) aus einem Gärschrank (12) entnimmt und
b) wenigstens einen Etagenbackofen (11) be- und entlädt, wobei
c) diese im wesentlichen aus einer quer zur Ofenfront verfahrbaren Laufkatze (4)
d) mit einem daran befindlichen und in vertikaler Achse mittels einer Hubeinrichtung heb- und senkbaren länglichen Beschickungstisch (2) besteht,
e) der zum Zwecke der Be- und Entladung eine in seiner Längsrichtung verfahrbare Zunge (23) mit Zungenspitze (23') und einem vorund rückwärts antreibbaren Band (22) besitzt,
f) wobei das die Teiglinge (18) aufnehmende Band (22) mit einer Bandtrommel (16) und einen, Trommelmotor (17) verbunden ist und an der Zungenspitze (23') umgelenkt wird und
g) wobei der Antrieb für die Hub- und Senkbewegung sowie der Antrieb für die Fahrbewegung der Laufkatze (4) in Abhängigkeit des Backprogrammms von einer Steuereinrichtung (10) initiert wird,
**dadurch gekennzeichnet,**
h) **daß** die Hubeinrichtung zumindest aus zwei hohlförmigen, verwindungsfesten Hub- und Führungselemente enthaltenden Hubsäulen (3) besteht,
i) zwischen denen der Beschickungstisch (2) mit den Hub- und Führungselementen lösbar verbunden angeordnet ist und
j) daß eine Absaugeinrichtung mit einem ein quer zur Längsrichtung verlaufendes Rohr (19) aufweisenden Saugrohrsystem zum Ansaugen von im Etagenbackofen (11) oder Gärschrank (12) verbliebenen Rückständen vorgesehen ist,
j1) das unterhalb des Bandes (22),
j2) unmittelbar hinter der Zungen (23) angeordnet ist.

2. Be- und Entladeeirichtung nach Anspruch 1, dadurch gekennzeichnet, dass die Hub- und Führungselemente in den Hubsäulen (3) jeweils aus einer vertikal angeordneten Gewindespindel (5) und einer mit Führungsschlitten (61) ausgerüsteten Führungsstange (6) besteht, wobei die Gewindespindel (5) über einen auf der Laufkatze (4) angeordneten Motor (14) antreibbar ist und eine Spindelmutter (51) aufweist und die Spindelmutter (51) sowie die führungsschlitten (61) über eine Flanschplatte (8) jeweils mit den Längsseiten (21) des Beschickungstisches (2) verbunden sind.

3. Be- und Entladeeinrichtung nach Anspruch 1 und 2, dadurch gekennzeichnet, dass die Hubsäulen (3) aus gekanteten U-Profilträgern mit einer unteren profilschliessenden Bodenplatte (31) bestehen.

4. Be-und Entladeeinrichtung nach Anspruch 3, dadurch gekennzeichnet, dass auf der Bodenplatte (31) ein Lager (52) für die Gewindespindel (5) angeordnet ist.

5. Be- und Entladeeinrichtung nach Anspruch 1, dadurch gekennzeichnet, dass die Laufkatze (4) in einer vor der Ofenfront frei aufgestellten selbsttragenden Laufbahn (1) angeordnet ist.

6. Be-und Entladeeinrichtung nach Anspruch 5, dadurch gekennzeichnet, dass in der Laufbahn (1) eine Kerbenleiste (1') für die Arretierung der Laufkatze (4) angeordnet ist.

7. Be-und Entladeeinrichtung nach wenigstens einem der vorherigen Ansprüche, dadurch gekennzeichnet, dass für alle Haltepositionen der Laufkatze (4), Beschickungstisch (2) sowie Hubeinrichtung (3) in allen Bewegungsrichtungen Steuerschalter (7,7',72,73,74,) vorgesehen sind, die mit der Steuereinrichtung (10) über Leitungen (9) verbunden sind.

8. Be- und Entladeeinrichtung nach wenigstens einem der vorherigen Ansprüche, dadurch gekennzeichnet, dass alte Antriebe als frequenzgeregelte Motore ausgebildet sind und über die Steuereinrichtung (10) über eine Anfahrrampe angefahren und über eine Bremsrampe abgebremst werden.

9. Be-und Entladeeinrichtung nach Anspruch 7 oder 8, dadurch gekennzeichnet, dass alle Steuerschalter (7,7',72,73,74) als induktive Näherungsschalter ausgebildet sind und über die Steuereinrichtung (10), die als speicherprogrammierbare Steuerung (SPS) ausgebildet ist, aktiviert werden.

10. Be-und Entladeeinrichtung nach Anspruch 1, dadurch gekennzeichnet, dass der Beschickungstisch (2) im wesentlichen aus zwei als Führung für die Zunge (23) dienenden Seitenteilen (21), die über ein Tragblech (24) und einen Rohrrahmen (25) miteinander verbunden sind, besteht, wobei das die Teiglinge (18) aufnehmende Band (22) unmittelbar nach seiner Umlenkung an der Zungenspitze (23') über das mit dem Rohrahmen (25) in Verbindung stehende Rohr (19), welches die Absaugeinrichtung mit bildet, zur Unterseite des Tragbleches (24) zurückgeführt ist.

## Claims

1. Loading and unloading equipment for multi-deck ovens (11),
a) which removes the dough pieces (18) from a fermenter (12) and
b) loads and unloads at least one multi-deck oven (11),
c) this equipment substantially consisting of a travelling crab (4) displaceable crosswise to the front of the oven
d) with a longitudinal charging table (2) located thereon to be lifted and lowered vertically by means of a lifting device,
e) which charging table (2), for the purpose of loading and unloading, possesses a tongue (23) displaceable in the lengthwise direction of the charging table (2) and having a tip (23') and a belt (22) drivable forwards and backwards,
f) the belt (22) holding the dough pieces (18) being connected with a belt drum (16) and a drum motor (17) and deflected at the tip (23'), and
g) the drive for the lifting and lowering motion as well as the drive for the driving motion of the travelling crab (4) being initiated in dependence on the baking program by a control unit (10),
characterized in
h) that the lifting device consists at least of two hollow, torsion-resistant lifting columns (3) comprising lifting and guide elements,
i) between which lifting columns (3) the charging table (2) is disposed in a manner releasably joined to the lifting and guide elements, and
j) in that a suction device is provided for the suction of residue in the multi-deck oven (11) or fermenter (12), having a suction pipe system which comprises a pipe (19) which runs crosswise to the lengthwise direction,
j1) which suction pipe system is disposed underneath the belt (22),
j2) directly behind the tongue (23).

2. Loading and unloading equipment according to claim 1, characterized in that the lifting and guide elements in the lifting columns (3) each comprise a threaded spindle (5) of vertical arrangement and a guide rod (6) equipped with guide carriages (61), the threaded spindle (5) being drivable by a motor (14) mounted on the travelling crab (4) and having a spindle nut (51), and the spindle nut (51) as well as the guide carriages (61) being joined to the lengthwise sides (21) of the charging table (2) by way of a flanged plate (8).

3. Loading and unloading equipment according to claim 1 and 2, characterized in that the lifting columns (3) consist of edged U-section supports having a lower bottom plate (31) which closes the section.

4. Loading and unloading equipment according to claim 3, characterized in that a bearing (52) for the threaded spindle (5) is disposed on the bottom plate (31).

5. Loading and unloading equipment according to claim 1, characterized in that the travelling crab (4) is disposed on a self-supporting track (1) freely placed before the oven front.

6. Loading and unloading equipment according to claim 5, characterized in that a notched bar (1') for arresting the travelling crab (4) is disposed on the track (1).

7. Loading and unloading equipment according to at least one of the preceding claims, characterized in that for all stop positions of the travelling crab (4), of the charging table (2) and the lifting device (3) in all moving directions, control switches (7, 7', 72, 73, 74) are provided, which are connected with the control unit (10) via lines (9).

8. Loading and unloading equipment according to at least one of the preceding claims, characterized in that all the drives are frequency-regulated motors and are started by the control unit (10) via a starting ramp and braked via a braking ramp.

9. Loading and unloading equipment according to claim 7 or 8, characterized in that all the control switches (7, 7', 72, 73, 74) are inductive proximity switches and are activated via the control unit (10) which is formed as a stored program control (SPS).

10. Loading and unloading equipment according to claim 1, characterized in that the charging table (2) consists substantially of two side parts (21) which serve as a guide for the tongue (23) and are joined to each other by a supporting sheet (24) and a pipe frame (25), wherein the belt (22) which holds the dough pieces (18), directly after being deflected at the tip (23'), is guided back to the underside of the supporting sheet (24) via the pipe (19) which communicates with the pipe frame (25) and participates in the formation of the suction device.

## Revendications

1. Dispositif de chargement et de déchargement pour fours de boulangerie à étages (11),
a) qui prélève les pâtons (18) dans une armoire de fermentation (12), et
b) qui charge et décharge au moins un four de boulangerie à étages (11),
c) ce dispositif consistant globalement en un chariot roulant (4) déplaçable perpendiculairement à la partie frontale du four,
d) avec une table d'alimentation (2) oblongue située à l'intérieur et pouvant effectuer un mouvement ascendant et descendant, suivant un axe vertical, à l'aide d'un dispositif élévateur,
e) et qui présente, pour le chargement et le déchargement, une langue (23) déplaçable dans son sens longitudinal, avec pointe de langue (23'), et une bande transporteuse (22) pouvant être entraînée selon un mouvement d'aller et de retour,
f) la bande transporteuse (22), qui prend en charge les pâtons (18) étant reliée à un tambour à bande (16) et à un moteur-tambour (17) et étant renvoyée au niveau de la pointe de langue (23'),
g) et dans lequel l'entraînement pour le mouvement ascendant et descendant ainsi que l'entraînement pour le mouvement de translation du chariot roulant (4) sont lancés en fonction du programme de cuisson, par un dispositif de commande (10),
caractérisé
h) en ce que le dispositif élévateur consiste en au moins deux colonnes élévatrices (3) creuses, résistantes à la torsion et contenant des éléments de levage et de guidage,
i) en ce que la table d'alimentation (2) est disposée entre ces colonnes et est reliée, de manière mobile, aux éléments de levage et de guidage, et
j) en ce qu'un dispositif d'aspiration est prévu, qui comporte un système tubulaire d'aspiration, présentant un tube (19), qui s'étend transversalement au sens longitudinal, afin d'aspirer les résidus demeurant dans le four de boulangerie à étages (11) ou dans l'armoire de fermentation (12),
j1) ce système étant disposé au-dessous de la bande transporteuse (22), j2) et immédiatement derrière la langue (23).

2. Dispositif de chargement et de déchargement selon la revendication 1, caractérisé en ce que les éléments de levage et de guidage présents dans les colonnes élévatrices (3) consistent chaque fois en une tige filetée (5), disposée verticalement, et en une tige de guidage (6) équipée de coulisseaux (61), la tige filetée (5) pouvant être commandée par l'intermédiaire d'un moteur (14) disposé sur le chariot roulant (4), et présentant un écrou (51), et en ce que l'écrou (51) ainsi que les coulisseaux (61) sont chaque fois reliés, par l'intermédiaire d'une plaque formant aile (8) aux côtés longs (21) de la table d'alimentation (2).

3. Dispositif de chargement et de déchargement selon les revendications 1 et 2, caractérisé en ce que les colonnes élévatrices (3) consistent en des poutres profilées en U, à arêtes vives, avec une plaque de base (31) inférieure fermant le profilé.

4. Dispositif de chargement et de déchargement selon la revendication 3, caractérisé en ce qu'un palier (52) pour la tige filetée (5) est placé sur la plaque de base (31).

5. Dispositif de chargement et de déchargement selon la revendication 1, caractérisé en ce que le chariot roulant (4) est placé dans un chemin de roulement (1) autoporteur et librement installé devant la partie frontale du four.

6. Dispositif de chargement et de déchargement selon la revendication 5, caractérisé en ce qu'une barre crantée (1') est située dans le chemin de roulement (1) pour le blocage du chariot roulant (4).

7. Dispositif de chargement et de déchargement selon au moins l'une des revendications précédentes, caractérisé en ce que, pour toutes les positions d'arrêt du chariot roulant (4), de la table d'alimentation (2) ainsi que du dispositif élévateur (3) dans tous les sens de déplacement, on prévoit des interrupteurs de commande (7, 7', 72, 73, 74), qui sont reliés, par l'intermédiaire de lignes (9), au dispositif de commande (10).

8. Dispositif de chargement et de déchargement selon au moins l'une des revendications précédentes, caractérisé en ce que tous les éléments d'entraînement sont réalisés sous la forme de moteurs asservis en fréquence, et en ce que, par l'intermédiaire du dispositif de commande (10), ils démarrent avec une rampe de démarrage et ils sont freinés avec une rampe de freinage.

9. Dispositif de chargement et de déchargement selon la revendication 7 ou 8, caractérisé en ce que tous les interrupteurs de commande (7, 7', 72, 73, 74) sont réalisés sous la forme d'interrupteurs de proximité inductifs et sont mis en fonction par l'intermédiaire du dispositif de commande (10), qui est réalisé en tant que commande à programme enregistré (SPS).

10. Dispositif de chargement et de déchargement selon la revendication 1, caractérisé en ce que la table d'alimentation (2) consiste globalement en deux parties latérales (21), servant de guidage pour la langue (23) et reliées l'une à l'autre par l'intermédiaire d'une tôle de support (24) et d'un cadre tubulaire (25), la bande transporteuse (22) prenant en charge les pâtons (18) étant, immédiatement après son renvoi au niveau de la pointe de langue (23'), ramenée au-dessus du tube (19), qui communique avec le cadre tubulaire (25) et qui fait partie avec celui-ci du dispositif d'aspiration, en direction du dessous de la tôle de support (24).
